(19) Europäisches Patentamt

European Patent Office

Office européen des brevets

(11) Numéro de publication : **0 318 348 B1**

(12) **FASCICULE DE BREVET EUROPEEN**

(45) Date de publication du fascicule du brevet :
**15.01.92 Bulletin 92/03**

(21) Numéro de dépôt : **88402792.1**

(22) Date de dépôt : **07.11.88**

(51) Int. Cl.⁵ : **B29C 59/04**

(54) **Procédé et dispositif pour la fabrication d'une feuille de matière plastique de haute qualité optique.**

(30) Priorité : **12.11.87 FR 8715626**

(43) Date de publication de la demande :
**31.05.89 Bulletin 89/22**

(45) Mention de la délivrance du brevet :
**15.01.92 Bulletin 92/03**

(84) Etats contractants désignés :
**BE DE FR GB IT SE**

(56) Documents cités :
**EP-A- 0 212 232**
**DE-A- 1 729 016**
**FR-A- 1 039 678**
**US-A- 3 232 780**
**US-A- 4 035 549**

(73) Titulaire : **SAINT-GOBAIN VITRAGE INTERNATIONAL**
**18, avenue d'Alsace**
**F-92400 Courbevoie (FR)**

(72) Inventeur : **Bourelier, Claude**
**98 Avenue de St-Mandé**
**F-75012 Paris (FR)**

(74) Mandataire : **Muller, René et al**
**SAINT-GOBAIN RECHERCHE 39, quai Lucien Lefranc-BP 135**
**F-93303 Aubervilliers Cédex (FR)**

**Description**

La présente invention concerne la fabrication d'une feuille en matière plastique transparente de haute qualité optique qui peut être utilisée seule ou en association avec d'autres matériaux et notamment dans les vitrages feuilletés, dits asymétriques, où elle est associée à un support monolithique ou feuilleté, en verre et/ou en matière plastique, par exemple des pare-brise de véhicule, la feuille de matière plastique comprenant au moins une couche à base d'un polyuréthane présentant des propriétés d'absorbeur d'énergie.

On connait d'après la publication de brevet européen 0133090 une feuille transparente de haute qualité optique apte à être utilisée seule ou en association avec d'autres matériaux et notamment dans la fabrication des vitrages feuilletés décrits précédemment, cette feuille comprenant une couche formée dans un processus en continu par coulée réactive, sur un support plan horizontal duquel elle est détachable, d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5000 centipoises, à + 40°C, le composant polyol comprenant au moins un polyol long difonctionnel de masse moléculaire comprise entre 500 et 4000 et au moins un diol court en tant qu'agent d'allongement de chaine. Par coulée réactive on entend la coulée sous forme d'une couche ou d'un film d'un mélange liquide des composants à l'état de monomères ou de prépolymères, suivie d'une polymérisation de cette couche par la chaleur.

La coulée réactive procure une couche de haute qualité optique, en une seule opération.

Un des inconvénients de ce procédé de fabrication est la nécessité d'utiliser un long tunnel de polymérisation pour obtenir une polymérisation complète et éviter ainsi un marquage à l'enroulement en bout de ligne ou encore un traitement supplémentaire pour éviter ce marquage.

On peut aussi fabriquer des feuilles de polyuréthane, utilisable dans les vitrages feuilletés, par extrusion. C'est le cas général. Mais la feuille extrudée n'a pas directement la qualité optique. Celle-ci lui est procurée ultérieurement au cours de l'assemblage avec les autres éléments du vitrage. Lorsque la feuille de polyuréthane extrudée est utilisée en tant que couche intercalaire, la qualité optique est obtenue au moment de l'assemblage par pressage avec les autres éléments du vitrage. Lorsque la feuille de polyuréthane est utilisée en tant que feuille externe dans un vitrage feuilleté asymétrique, on peut obtenir la qualité optique à l'aide du procédé d'assemblage au contre-moule. A cette fin, on utilise une feuille de verre de forme identique à celle constituant l'élément rigide du vitrage dans le cas d'un vitrage verre-matière plastique souple en polyuréthane, on la place contre la face libre de la feuille souple et on presse l'ensemble à la température d'assemblage des vitrages feuilletés, c'est-à-dire à environ 120-130°C pendant 1 heure environ.

Un des inconvénients du procédé au contremoule, notamment dans la fabrication d'un vitrage feuille de verre-feuille souple est l'obligation d'utiliser en tant que contre-moule une deuxième feuille de verre de même profil que la feuille de verre entrant dans la composition du vitrage et qui à cette fin est bombée simultanément à la première, et qui après utilisation est mise au rebus.

Un autre inconvénient du procédé au contre-moule est que la qualité optique obtenue peut dans certains cas n'être que temporaire, des défauts mis en "mémoire" dans la feuille réapparaissant après plusieurs jours ou plusieurs mois.

L'invention propose un procédé qui obvie aux inconvénients cités. Selon ce procédé, on fabrique la couche de polyuréthane ayant des propriétés d'absorbeur d'énergie par extrusion et on la soumet juste après à un repassage par pressage à une température de couche supérieure à la température du point de ramollissement du polyuréthane afin de lui conférer la qualité optique la rendant apte à être utilisée dans la fabrication des vitrages feuilletés sans utilisation d'un contre-moule.

Le repassage qui suit l'extrusion peut être réalisé notamment par un écrasement contrôlé de la couche entre deux plaques ou entre deux bandes métalliques, portées aux températures adéquates indiqués précédemment.

Il peut aussi être réalisé par un laminage progressif à chaud aux températures adéquates entre des séries de rouleaux.

Il peut encore être obtenu par un pressage à chaud aux températures adéquates sur une surface cylindrique.

La forme préférée pour le repassage consiste à écraser de façon contrôlée la couche entre deux plaques de verre revêtues d'un produit anti-adhérent.

La couche "repassée" peut éventuellement subir des traitements ultérieurs. Par exemple, elle peut être revêtue d'une autre couche afin de conférer à la feuille des propriétés de surface, telles que résistance à la rayure, résistance à l'abrasion, etc... La couche repassée peut ainsi subir des traitements modifiant ses propriétés de surface, sans pour autant altérer la qualité optique obtenue. On peut ainsi traiter la face destinée à être orientée vers l'extérieur dans le vitrage feuilleté, par des acryliques ou des métacryliques.

L'invention concerne également un dispositif pour la mise en oeuvre du procédé. Le dispositif comprend une extrudeuse et des moyens de repassage à chaud de la couche, c'est-à-dire des moyens procurant une épaisseur uniforme et un état de surface lisse à la couche et une haute qualité optique.

Selon une forme de réalisation du dispositif, celui-ci comprend en tant que moyens de repassage, une presse équipée de deux plateaux parfaitement plans, tels des plateaux en verre de préférence, ou en acier, revêtus d'un agent anti-adhérent, ces plateaux étant chauffés à une température supérieure à la température du point de ramollissement de la couche extrudée.

Selon une caractéristique du dispositif, la presse est animée d'un mouvement de va et vient en suivant le déplacement de la feuille durant toute l'opération de pressage et en revenant au point de départ pour agir sur un autre tronçon de la feuille extrudée.

Entre l'extrudeuse et les moyens de repassage, il peut être prévu des rouleaux autour desquels passe la feuille et entre lesquels elle peut se relaxer.

Dans une variante du dispositif, la presse est à poste fixe et un des rouleaux entre l'extrudeuse et la presse est un rouleau valseur qui forme un tampon entre l'extrudeuse qui débite à vitesse constante et la presse qui agit en discontinu et sur une couche qui avance au pas à pas.

Dans une autre forme de réalisation du dispositif, celui-ci est équipé de deux bandes métalliques qui forment ensemble un tunnel de pressage.

Dans une autre forme de réalisation du dispositif, les moyens procurant la qualité optique sont des séries de rouleaux lamineurs.

Dans une autre forme de réalisation du dispositif, les moyens procurant la qualité optique sont formés d'au moins un grand cylindre sur lequel peut s'étaler par pressage la couche extrudée.

Le dispositif selon l'invention peut aussi comprendre d'autres moyens tels que des moyens pour l'apport d'une couche coulée, ou pour l'apport d'une couche par pulvérisation, pour le recouvrement de la couche extrudée après son repassage.

D'autres caractéristiques et avantages de l'invention apparaitront dans la description d'exemples de réalisation du dispositif selon l'invention faite en référence aux figures.

La figure 1 représente schématiquement une réalisation d'un dispositif utilisant en tant que moyens de repassage, une presse placée à un poste fixe.

La figure 2 représente schématiquement une réalisation du dispositif utilisant en tant que moyens de repassage deux bandes métalliques opérant en continu.

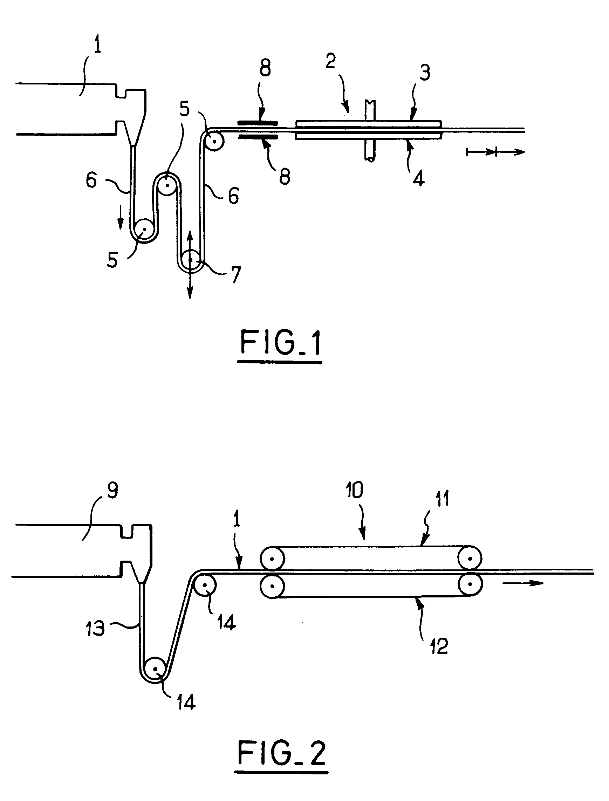

Le dispositif représenté sur la figure 1 comprend une extrudeuse 1 et une presse 2 munies de deux plateaux 3, 4, en verre, revêtus d'un produit anti-adhérent, disposée en aval de l'extrudeuse. Entre la presse et l'extrudeuse, le dispositif comprend plusieurs rouleaux 5 autour desquels passe la feuille 6 (ou couche) extrudée. Un des rouleaux est un rouleau valseur 7 qui peut se déplacer verticalement dans les deux sens, et ainsi séparer la ligne d'extrusion-repassage en une partie amont dans laquelle la feuille est animée d'une vitesse constante correspondant à la vitesse d'extrusion et une partie aval dans laquelle la feuille est animée d'un mouvement d'avance au pas à pas correspondant au pressage discontinu dans le temps d'une partie de la feuille.

Des moyens de chauffage 8 peuvent être prévus juste en amont de la presse afin de porter la couche à une température supérieure à la température du point de ramollissement, au cas ou la couche se serait trop refroidie entre l'extrudeuse et la presse.

Le dispositif représenté sur la figure 2, comprend une extrudeuse 9 et une presse 10 opérant en continue, formée de deux bandes métalliques sans fin 11, 12, se déplaçant à la même vitesse que la couche extrudée 13. Les deux bandes exercent un pressage continu en étant maintenues à une distance déterminée l'une de l'autre, distance légèrement inférieure à l'épaisseur de la couche. Les deux bandes sont également revêtues d'un produit anti-adhérent. Dans ce dispositif le repassage de la feuille s'effectue après passage autour des rouleaux 14, à la même vitesse que sa formation à la sortie de l'extrudeuse.

Les exemples suivants illustrent l'invention.

EXEMPLE 1 :

Dans un réacteur, on mélange un polytétraméthylèneglycol, de masse moléculaire 1000, les proportions des constituants étant telles que le polytétraméthylèneglycol apporte 0,37 équivalent en groupes hydroxyles alors que le butanediol-1,4 en apporte 0,63, on ajoute du dilaurate de dibutyl-étain à raison de 0,03% en poids de la masse totale du composant polyol et du composant isocyanate. On ajoute le composant isocyanate, à savoir le 3-isocyanatométhyl-3,5,5-triméthylcyclohexylisocyanate (IPDI) présentant des fonctions urées obtenues par hydrolyse partielle de l'IPDI et ayant une teneur en groupements NCO d'environ 31,5% en poids. Les composants sont pris en quantité telle que le rapport NCO/OH est de 1. Le mélange est porté à 140° pendant 20 minutes. Le produit obtenu est introduit dans l'extrudeuse du dispositif décrit en relation avec la figure 1.

L'extrusion s'effectue à une température de 190°C. A la sortie, la couche possède un état de surface présentant des stries et des rayures. Après passage autour des rouleaux 5 et du rouleau valseur 7, la feuille arrive au pas à pas à la presse 2 où elle subit un pressage à 180°C de 10 bars durant 1 minute. Durant le pressage, le rouleau valseur se déplace pour absorber la longueur de la couche extrudée. A la sortie de la presse, la couche est parfaitement lisse. Elle peut être utilisée directement pour la fabrication du vitrage feuilleté, après avoir le cas échéant été revêtu d'une couche de protection assurant la résistance à la rayure ou à l'abrasion.

EXEMPLE TEMOIN 1

On opère comme dans l'exemple 1, sauf qu'on effectue le repassage par pressage à une température de couche à 140°C avec une pression de 10 bars durant 1 minute. A la sortie de la presse, la couche présente des défauts de surface correspondant à des traces de l'extrusion. (Le point de ramollissement de la couche est de 165°C).

EXEMPLE TEMOIN 2

On opère comme dans l'exemple témoin 1 sauf qu'on effectue le pressage à une température de couche de 130°C avec une presse de 10 bars durant 15 minutes. La couche à la sortie de la presse présente encore quelques défauts de surface.

EXEMPLE 2 :

On prépare une polyuréthane-polyurée de la façon suivante :

Dans un récipient on agite durant 12 heures, à 60°C, sous azote, 70 kg (31,2 moles) d'un polyadipate de 1,4-butanediol, présentant des groupes OH terminaux, de poids moléculaire moyen voisin de 2200, et 34,7 kg (156,3 moles) de l'isocyanato-3-isocyanatométhyl-3,3,5-triméthylcyclohexane (diisocyanate d'isophorone) (IPDI). On ajoute ensuite 7,5 kg (83,3 moles) de 1,4-butanediol et 1,4 kg (10,45 moles) d'acide diméthylolpropionique, et on agite encore durant 2 heures à 100°C.

Par des conduits séparés, on introduit en continu, à raison de 600 g par seconde (0,313 mole) du prépolymère NCO obtenu précédemment et 26,6 g/s (0,313 mole) d'isophoronediamine (IPDA), dans la trémie d'alimentation d'une extrudeuse chauffée, à double vis. Le rapport de la longueur au diamètre des vis est d'environ 40.

Les températures du produit fondu s'échelonnent le long des vis de 120 à 200°C. Le produit fondu est refroidi brutalement dans un bain d'eau, puis débarrassé de l'eau adhérente à l'air comprimé avant d'être granulé. Il se présente sous forme d'une résine incolore, présentant la transparence du verre. La teneur en groupes NH-CO-NH— est de 2,46% en poids.

On extrude, à l'aide d'une extrudeuse à deux vis, les granulés de la polyuréthane-polyurée obtenue précédemment. L'extrusion se fait à une température de masse d'environ 200°C.

La couche d'épaisseur 0,8 mm passe ensuite en discontinu dans la presse du dispositif décrit en relation avec la figure 1 où elle est pressée à 180°C pendant 1 minute sous une pression de 10 bars. La couche à la sortie de la presse présente la qualité optique permettant son utilisation dans les vitrages feuilletés sans qu'il soit nécessaire d'utiliser le procédé au contre-moule.

EXEMPLE TEMOIN 3

On opère comme dans l'exemple 2, sauf qu'on effectue le pressage à une température de couche de 130°C, à une pression de 10 bars et durant 1 minute. A la sortie de la presse, la couche présente des défauts de surface (Le point de ramollissement de la couche est de 140°C).

**Revendications**

1. Procédé pour la fabrication d'une feuille de matière plastique, de haute qualité optique, comprenant au moins une couche à base d'un polyuréthane présentant des propriétés d'absorbeur d'énergie, caractérisé en ce que la couche de polyuréthane est obtenue par extrusion suivie d'un repassage juste après par pressage à une température de couche supérieure à la température du point de ramollissement de la couche de polyuréthane.

2. Procédé selon la revendication 1, caractérisé en ce que le pressage est effectué durant un temps inférieur à 10 minutes et à une température de couche juste supérieure à celle du point de ramollissement.

3. Procédé selon la revendication 2, caractérisé en ce que la température de couche est supérieure d'environ 5 à 20°C au point de ramollissement.

4. Procédé selon une des revendications 1 à 3, caractérisé en ce que la couche repassée est soumise à un traitement ultérieur.

5. Procédé selon la revendication 4, caractérisé en ce que le traitement ultérieur est un recouvrement par une couche ayant des propriétés de surface.

6. Procédé selon la revendication 4, caractérisé en ce que le traitement ultérieur est un traitement par des composés acryliques ou méthacryliques sans influence sur la qualité optique.

7. Dispositif pour la mise en oeuvre du procédé selon une des revendications 1 à 6, caractérisé en ce qu'il comprend une extrudeuse, et des moyens de repassage revêtus d'un produit anti-adhérent procurant la qualité optique disposés en aval de l'extrudeuse.

8. Dispositif selon la revendication 7, caractérisé en ce que les moyens de repassage sont une presse disposée à poste fixe, et qu'il comprend un rouleau valseur entre l'extrudeuse et la presse.

9. Dispositif selon la revendication 7, caractérisé en ce que les moyens de repassage sont une presse qui suit la feuille au cours de son défilement en continu durant toute la durée du pressage.

10. Dispositif selon la revendication 7, caractérisé en ce que les moyens de repassage sont deux bandes métalliques qui forment ensemble un tunnel de pressage.

11. Dispositif selon la revendication 7, caractérisé en ce que les moyens de repassage sont des rouleaux lamineurs.

12. Dispositif selon la revendication 7, caractérisé en ce que les moyens de repassage comprenant un cylindre de grand diamètre sur lequel peut s'étaler par pressage la couche extrudée.

13. Dispositif selon une des revendications 7 à 12, caractérisé en ce qu'il comprend des moyens pour l'apport d'une couche supplémentaire, disposés en aval des moyens de repassage.

14. Dispositif selon une des revendications 7 à 12, caractérisé en ce qu'il comprend des moyens pour le traitement ultérieur de la couche repassée.

## Patentansprüche

1. Verfahren zur Herstellung einer Kunststoffolie von hoher optischer Qualität, die wenigstens eine Schicht auf der Basis eine Polyurethans aufweist, das energieabsorbierende Eigenschaften hat, **dadurch gekennzeichnet,** daß die Polyurethan-Schicht durch Extrudieren erhalten wird, gefolgt von einem direkt anschliessende n Glätten durch Pressen bei einer Temperatur der Schicht, die über der Erweichungstemperatur der Polyurethan-Schicht liegt.

2. Verfahren nach Anspruch 1, **dadurch gekennzeichnet,** daß das Pressen während einer Zeitdauer, die unter 10 Minuten liegt, und bei einer Schichttemperatur, die gerade über der des Erweichungspunktes liegt, durchgeführt wird.

3. Verfahren nach Anspruch 2, **dadurch gekennzeichnet,** daß die Schichttemperatur etwa 5 bis 20°C höher ist als der Erweichungspunkt.

4. Verfahren nach einem der Ansprüche 1 bis 3, **dadurch gekennzeichnet,** daß die geglättete Schicht einer Nachbehandlung unterworfen wird.

5. Verfahren nach Anspruch 4, **dadurch gekennzeichnet,** daß die Nachbehandlung ein Überziehen mit einer Schicht ist, die Oberflächenqualitäten aufweist.

6. Verfahren nach Anspruch 4, **dadurch gekennzeichnet,** daß die Nachbehandlung eine Behandlung mit Acryl-oder Methacryl-Verbindungen ist, die die optische Qualität nicht beeinflussen.

7. Vorrichtung zur Durchführung des Verfahrens nach einem der Ansprüche 1 bis 6, **dadurch gekennzeichnet,** daß sie einen Extruder und Glätt vorrichtungen aufweist, die mit einem nichthaftenden, die optische Qualität bewirkenden Material überzogen und nach dem Extruder angeordnet sind.

8. Vorrichtung nach Anspruch 7, **dadurch gekennzeichnet,** daß die Glättvorrichtungen von einer Presse an einer ortsfesten Anlage gebildet sind und daß die Vorrichtung zwischen dem Extruder und der Presse eine vertikal bewegliche Walze aufweist.

9. Vorrichtung nach Anspruch 7, **dadurch gekennzeichnet,** daß die Glättvorrichtungen von einer Presse gebildet sind, die der Folie beim Durchlaufen während der gesamten Dauer des Pressens kontinuierlich nachfährt.

10. Vorrichtung nach Anspruch 7, **dadurch gekennzeichnet,** daß die Glätt vorrichtungen von zwei Metallbändern gebildet sind, die gemeinsam einen Preß-Tunnel bilden.

11. Vorrichtung nach Anspruch 7, **dadurch gekennzeichnet,** daß die Glätt vorrichtungen von zwei Walzrollen gebildet sind.

12. Vorrichtung nach Anspruch 7, **dadurch gekennzeichnet,** daß die Glätt vorrichtungen einen Zylinder mit großem Durchmesser aufweisen, auf dem sich die extrudierte Schicht beim Pressen ausbreiten kann.

13. Vorrichtung nach einem der Ansprüche 7 bis 12, **dadurch gekennzeichnet,** daß sie Vorrichtungen zum Zuführen einer zusätzlichen Schicht aufweist, welche nach den Glätt vorrichtungen angeordnet sind.

14. Vorrichtung nach einem der Ansprüche 7 bis 12, **dadurch gekennzeichnet,** daß sie Vorrichtungen zur Nachbehandlung der geglätteten Schicht aufweist.

## Claims

1. Process for the production of a sheet of plastics material of high optical quality, comprising at least one film based upon a polyurethane having energy-absorber properties, characterized in that the polyurethane film is obtained by extrusion followed by ironing soon afterwards by pressing at a film temperature higher than the temperature of the softening point of the polyurethane film.

2. Process according to Claim 1, characterized in that the pressing is carried out during a period of less than 10 minutes and and at a film temperature just above that of the softening point.

3. Process according to Claim 2, characterized in that the film temperature is higher by approximately 5 to 20°C than the softening point.

4. Process according to one of Claims 1 to 3, characterized in that the ironed film is subjected to a further treatment.

5. Process according to Claim 4, characterized in that the further treatment is a covering with a film having surface properties.

6. Process according to Claim 4, characterized in that the further treatment is a treatment with acrylic or methacrylic compounds that do not influence the optical quality.

7. Device for carrying out the process according to one of Claims 1 to 6, characterized in that it comprises an extruder and ironing means faced with an antistick product for producing the optical quality, disposed downstream of the extruder.

8. Device according to Claim 7, characterized in that the ironing means are a press disposed at a fixed station, and that the device comprises a compensating roller between the extruder and the press.

9. Device according to Claim 7, characterized in that the ironing means are a press which follows the sheet during the course of its passage continuously throughout the duration of pressing.

10. Device according to Claim 7, characterized in that the ironing means are two metal bands which together form a pressing tunnel.

11. Device according to Claim 7, characterized in that the ironing means are calendering rollers.

12. Device according to Claim 7, characterized in that the ironing means comprise a cylinder of large diameter, on which the extruded film can spread out by pressing.

13. Device according to one of Claims 7 to 12, characterized in that it comprises means for applying a supplementary film, disposed downstream of the ironing means.

14. Device according to one of Claims 7 to 12, characterized in that it comprises means for the further treatment of the ironed film.

FIG_1

FIG_2